# EUROPEAN PATENT APPLICATION

(11) **EP 4 741 323 A1**
(43) Date of publication of application: **13.05.2026**
(21) Application number: 25215187.3
(22) Date of filing: 12.11.2025
(51) Int. Cl.: B65G 47/51, B65G 47/71

(54) **SYSTEM FOR FEEDING AND ACCUMULATING PARALLELEPIPED-SHAPED PACKS FOR A MANUFACTURING MACHINE AND MACHINE FOR MANUFACTURING PARALLELEPIPED-SHAPED PACKS**

(30) Priority: 12.11.2024 IT 202400025467
(71) Applicant: G.D S.p.A., 40133 Bologna (IT)
(72) Inventor: MARTINI, Saverio, 40133 BOLOGNA (IT); PARAZZA, Davide, 40133 BOLOGNA (IT); CACCIARI, Valerio, 40133 BOLOGNA (IT)
(74) Representative: Studio Torta S.p.A.

(57) **Abstract**

A system (10) for feeding and accumulating parallelepiped-shaped packs (P) for a manufacturing machine (1) is described, comprising a transport conveyor (11) configured to define two channels (C, C*) arranged parallel to one another and to a feeding direction (A) of the packs (P), wherein a first channel (C) is configured to receive the packs (P) coming from a processing station (S3) of the manufacturing machine (1) and to feed them to an output station (6) of the manufacturing machine (1) during normal functioning of the system (10); and a second channel (C*) is configured to accommodate the packs (P) coming from the processing station (S3) when a malfunction occurs downstream of the system (10) and once the filling of the first channel (C) has been completed, and is configured to feed the packs (P) to the output station (6) once the malfunction downstream of the system (10) has been resolved.

## Description

### CROSS-REFERENCE TO RELATED APPLICATIONS

This patent application claims priority from Italian patent application no. 102024000025467 filed on November 12, 2024, the entire disclosure of which is incorporated herein by reference.

### BACKGROUND

The present invention relates to a system for feeding and accumulating parallelepiped-shaped packs for a manufacturing machine and a machine for manufacturing parallelepiped-shaped packs provided with a system for feeding and accumulating packs.

### PRIOR ART

As is known, a manufacturing machine, in particular a cellophane wrapping machine or an over-wrapping machine, is configured to perform the manufacturing of packs in wrappings of thermoplastic material and comprises a feeding system that extends along a processing path through a plurality of processing stations.

In more detail, the manufacturing machine comprises a moulding station configured to receive the packs and the wrappings of thermoplastic material as an input and to wrap, at least partially, each wrapping of thermoplastic material around the respective pack and to perform a first sealing of the wrapping along a smaller side wall of the pack.

The machine then comprises a sealing station configured to perform a second sealing of each wrapping of thermoplastic material along, respectively, an upper wall and a bottom wall of the pack opposite to one another; and a post-heating station configured to cause a heat-shrinkage of the wrapping of thermoplastic material and to increase the adherence thereof to the pack. Lastly, the manufacturing machine comprises a buffer device in which to accumulate the packs coming from the post-heating station and to be directed towards an output station.

Although the manufacturing machines of known type operate in a satisfactory manner, there is an increasing need to have solutions that allow their productivity and performance to be improved. For example, when a fault or a malfunction occurs downstream of the manufacturing machine, it is necessary also to block operation of the manufacturing machine itself; the result is that some packs being processed in the manufacturing machine accumulate in the buffer device, whereas others remain blocked inside the moulding station, the sealing station or the post-heating station. However, once the fault or malfunction has been resolved, upon restarting of the manufacturing, it is necessary to discard many of the packs that remained blocked inside the moulding station, the sealing station or the post-heating station.

Documents US5630309, JPH07267351, US4635784, US5038909, FR2804419 and US2005011814 describe feeding systems comprising at least two channels arranged side by side along a feeding direction.

### DESCRIPTION OF THE INVENTION

An object of the present invention is to provide a system for feeding and accumulating parallelepiped-shaped packs for a manufacturing machine that is free of the drawbacks of the prior art and that is easy and economical to manufacture.

A further object of the present invention is to provide a machine for manufacturing parallelepiped-shaped packs provided with a system for feeding and accumulating packs that is free of the drawbacks of the prior art and that is easy and economical to manufacture.

According to the present invention, a system for feeding and accumulating parallelepiped-shaped packs for a manufacturing machine and a machine for manufacturing parallelepiped-shaped packs provided with a system for feeding and accumulating packs are provided in accordance with what is established in the appended claims.

### BRIEF DESCRIPTION OF THE DRAWINGS

The present invention will now be described with reference to the appended drawings, which illustrate a non-limiting embodiment thereof, wherein:
- Figure 1 is a front schematic view and with parts removed for clarity of a manufacturing machine obtained in accordance with the present invention;
- Figures 2 and 3 show in sequence the operating method of a first embodiment of a system for feeding and accumulating packs of the manufacturing machine of Figure 1 obtained in accordance with the present invention; and
- Figures 4 and 5 show in sequence the operating method of a second embodiment of a system for feeding and accumulating packs of the manufacturing machine of Figure 1 obtained in accordance with the present invention.

### PREFERRED EMBODIMENTS OF THE INVENTION

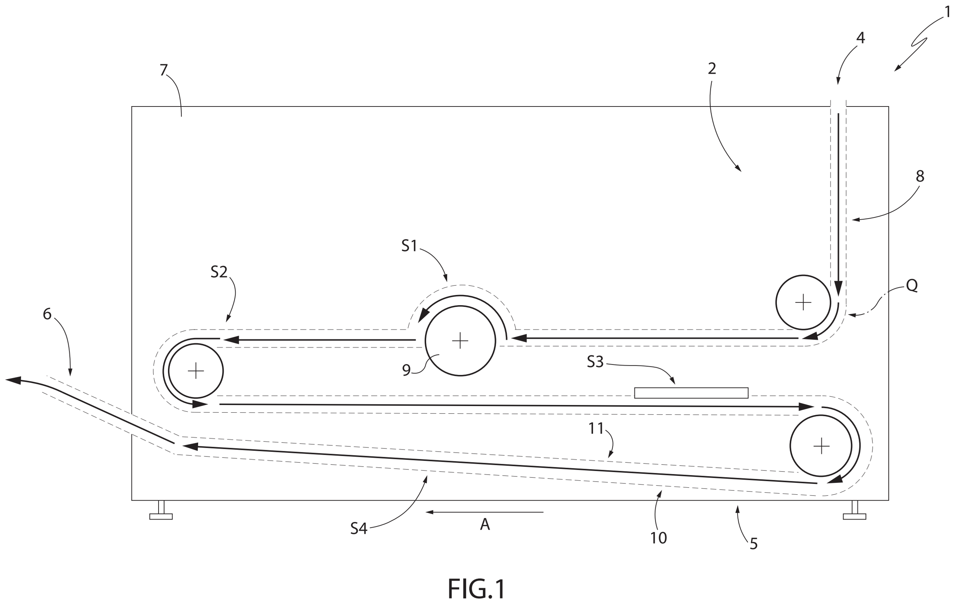

In Figure 1, the number 1 is used to indicate, in its entirety, a manufacturing machine configured to perform the manufacturing of packs P in wrappings of wrapping material on a line for the production and manufacturing of packs P.

In particular, the manufacturing machine 1 is a cellophane wrapping machine or an over-wrapping machine configured to wrap the packs P or groups of packs P with sheets of wrapping of thermoplastic material. Alternatively, the manufacturing machine 1 can be a strapping machine configured to wrap groups of packs P in wrappings of wrapping material defined by sheets or blanks of paper material.

In the description that follows, specific reference will be made to the case of a cellophane wrapping machine configured to wrap parallelepiped-shaped packs P with sheets of wrapping of thermoplastic material.

The manufacturing machine 1 comprises a feeding system 2 that extends along a processing path Q and comprises a plurality of processing stations (or operating stations) that are arranged in succession along the feeding system 2 and are configured to perform processing on the packs P.

In more detail, the feeding system 2 is configured to transfer the packs P along an initial section of the processing path Q in a feeding direction A from an input station 4 towards a number of processing stations 5 and as far as an output station 6. Said input, processing and output stations 4, 5, 6 are advantageously arranged in succession along the processing path Q. The manufacturing machine 1 further comprises a frame 7 inside which said input, processing and output stations 4, 5, 6 are accommodated/arranged in succession.

At the input station 4, the manufacturing machine 1 comprises a feeding unit 8 for feeding the packs P that is configured to transfer the packs P coming into the manufacturing machine 1 to a (first) processing station S1.

The processing station S1 is located downstream of the input station 4 along the processing path Q. The processing station S1 is a moulding and sealing station of the sheets of wrapping of thermoplastic material. In more detail, the processing station S1 is configured to receive as input from the feeding system 2 the packs P coming from the input station 4. The processing station S1 is further configured to receive as input the sheets of wrapping of thermoplastic material and comprises a moulding drum 9 (of known type and not described in detail) having a rotation axis and provided with a plurality of peripheral pockets, each of which is configured to accommodate a pack P and a respective sheet of wrapping of thermoplastic material. During rotation around the axis of each peripheral pocket, the sheet of wrapping of thermoplastic material is partially wrapped around the pack P and a first (partial) sealing of the sheet of wrapping of thermoplastic material is obtained, in particular along a smaller side wall of the pack P.

The packs P exiting from the processing station S1 are transferred to a (second) processing station S2 located downstream along the processing path Q. The processing station S2 is configured to receive as input from the feeding system 2 the packs P coming from the processing station S1 and is configured to obtain a second sealing of the sheet of wrapping of thermoplastic material along, respectively, an upper wall and a bottom wall of the pack P opposite to one another.

The packs P exiting from the processing station S2 are transferred to a (third) processing station S3 located downstream along the processing path Q. The processing station S3 is configured to receive as input from the feeding system 2 the packs P coming from the processing station S3 and is configured for thermal treatment of the packs P. In particular, at the processing station S3, the sheets of wrapping of thermoplastic material are subjected to a heating action. The purpose of heating is to cause heat-shrinkage of the thermo-plastic material and its greater adherence to the pack P (with consequent elimination of folds or wrinkles). The processing station S3 comprises a source of heat for heating of the wrappings of thermoplastic material and a channel in which the packs P slide, defined by a pair of belt conveyors arranged overlapped and facing and looped around respective pulleys.

Lastly, the manufacturing machine 1 comprises a (fourth) processing station S4 located downstream of the processing station S3 along the processing path Q. The processing station S4 is located in the lower part of the frame 7, underneath the other processing stations S1, S2, S3. The processing station S4 is configured to receive as input the packs P coming from the processing station S3 and to transfer them to the output station 6. The processing station S4 is configured to accumulate the packs P being processed inside the manufacturing machine 1 if a fault occurs on the line for production and manufacturing of packs P downstream of said manufacturing machine 1, so as to prevent transfer of the packs P towards the output station 6.

In other words, the processing station S4 acts as a buffer or inter-operational storage space for the packs being processed inside the manufacturing machine 1 before their transfer downstream of said manufacturing machine 1.

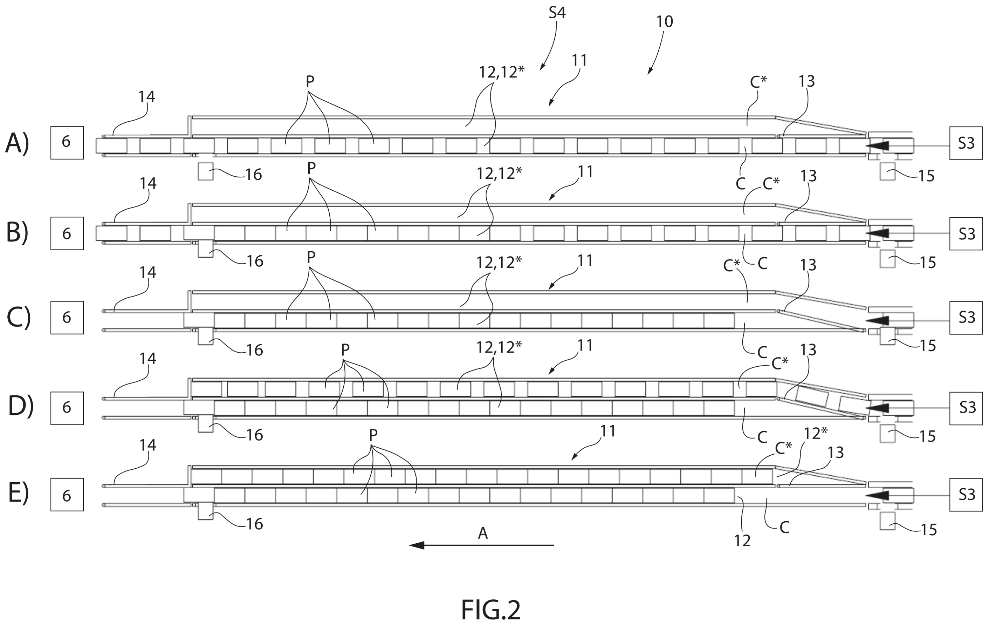

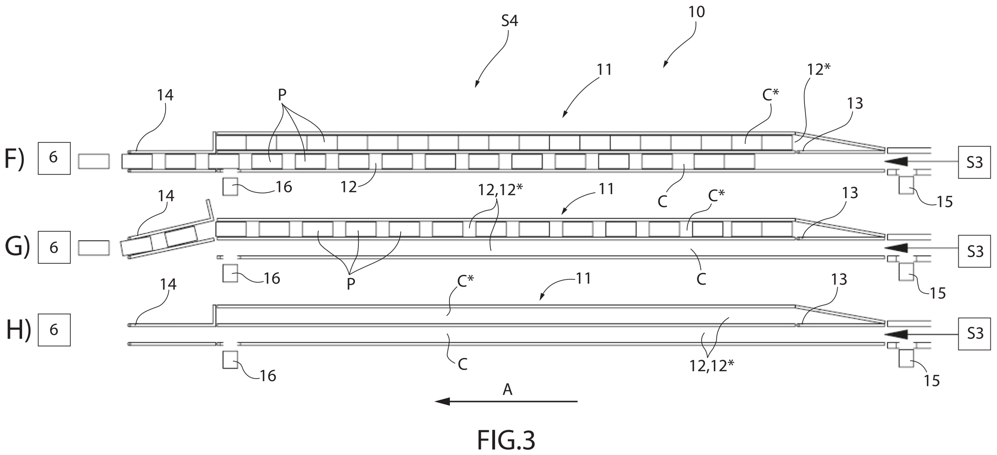

According to a first embodiment shown in Figures 2 and 3, the processing station S4 comprises a system 10 for feeding and accumulating the packs P that extends along a final section of the processing path Q along the feeding direction A.

According to a first embodiment, the feeding and accumulating system 10 comprises a transport conveyor 11 which in turn comprises a pair of belt conveyors 12, 12*, each having a single width. In other words, each belt conveyor 12, 12* has a width (obtained in a direction transverse to the feeding direction A) such as to accommodate a single pack P. Each belt conveyor 12, 12* is looped around a pair of pulleys and is provided with an upper branch and a lower branch. The two belt conveyors 12, 12* are arranged side by side and parallel to one another along the feeding direction A and have uniform dimensions (in particular, a length). Each of the two belt conveyors 12, 12* defines a respective channel C, C* for the packs P; the two channels C are arranged parallel to one another and to the feeding direction A.

According to a further and preferred embodiment (not shown), the feeding and accumulating system 10 comprises a transport conveyor 11 which in turn comprises a single belt conveyor 12 having a multiple width. In other words, the belt conveyor 12 has a width (obtained in a direction transverse to the feeding direction A) such as to accommodate a plurality of packs P arranged side by side.

In particular, the belt conveyor 12 has a double width, i.e., such as to accommodate two packs P arranged side by side. The belt conveyor 12 is looped around a pair of pulleys and is provided with an upper branch and a lower branch. The conveyor 11 further comprises partition elements configured to define a number, in particular two, of channels C, C* arranged parallel to one another and to the feeding direction A. Advantageously, the partition elements are fixed. The partition elements are defined by sides that extend substantially for the entire length of the upper branch of the belt conveyor 12.

The feeding and accumulating system 10 further comprises a (first) deflecting device 13 located at an input/output area of the transport conveyor 11 (i.e., at a first end of the belt conveyor 11). The deflecting device 13 is configured to selectively feed the packs P coming from the processing station S3 to the (first or main) channel C or to the (second or auxiliary) channel C*. In other words, the deflecting device 13 is configured to selectively establish a communication with the channel C or with the channel C*. The deflecting device 13 can therefore assume two different configurations: a first configuration in which the packs P coming from the processing station S3 are fed as an input to the channel C and a second configuration in which the packs P coming from the processing station S3 are fed as an input to the channel C*.

The feeding and accumulating system 10 further comprises a (second) deflecting device 14 located at an output area of the transport conveyor 11 (i.e., at a second end of the belt conveyor 11 opposite to the first end). The deflecting device 14 is configured to selectively establish a communication with the channel C or with the channel C* from which it receives the packs P to be transferred to the output station 6. In other words, the deflecting device 14 can assume two different configurations: a first configuration in which the packs P contained in the channel C are fed towards the output station 6 and a second configuration in which the packs P contained in the channel C* are fed towards the output station 6.

The feeding and accumulating system 10 further comprises a (first) stopping device 15 located at an input area of the transport conveyor 11. The stopping device 15 is configured to block the feeding of packs P coming from the processing station S3 as input both to the channel C and to the channel C*. The stopping device 15 is located downstream of the deflecting device 13 along the processing path Q.

The feeding and accumulating system 10 further comprises a (second) stopping device 16 located at an output area of the transport conveyor 11. The stopping device 16 is configured to block the feeding of packs P coming from the channel C towards the output station 6. The stopping device 16 is located downstream of the deflecting device 14 along the processing path Q.

The operating method of the feeding and accumulating system 10 discussed here above will be described below.

According to what is shown in Figure 2A, during normal operation of the feeding and accumulating system 10, the packs P coming from the processing station S3 reach the input area and the deflecting device 13 is arranged so as to direct them into the channel C.

The deflecting device 14 at the output area is configured so as to direct the packs P that have travelled along the channel C towards the line for production and manufacturing of packs P downstream of said manufacturing machine 1. The deflecting device 13 is therefore in the first configuration in which the packs P coming from the processing station S3 are fed as an input to the channel C, whereas the deflecting device 14 is therefore in the first configuration, in which the packs P contained in the channel C are fed towards the output station 6.

If, on the other hand, a malfunction or fault occurs on the line for production and manufacturing of packs P downstream of said manufacturing machine 1, the following steps occur in succession:
- the stopping device 16 is commanded to block the feeding of packs P coming from the channel C towards the output station 6 (Figure 2B); in this manner, the packs P coming from the processing station S3 accumulate inside the channel C up until when said channel C is completely full;
- once filling of the channel C is completed, the stopping device 15 is commanded to block the feeding of packs P coming from the processing station S3 towards the feeding and accumulating system 10 (Figure 2C);
- the deflecting device 13 is commanded to move from the first configuration, in which the packs P coming from the processing station S3 are fed as an input to the channel C, to the second configuration, in which the packs P coming from the processing station S3 are fed as an input to the channel C* (Figure 2D);

- once passage of the deflecting device 13 from the first configuration to the second configuration is completed, the stopping device 15 is commanded to unblock the feeding of packs P coming from the processing station S3 towards the feeding and accumulating system 10 and, in particular, towards the channel C* (Figure 2D); and
- lastly, all the packs P coming from the processing station S3 and being processed in the manufacturing machine 1 accumulate inside the channel C* up until filling of said channel C*; once filling of the channel C* is completed, the deflecting device 13 is commanded to move from the second configuration and to return once again into the first configuration (Figure 2E).

Once the malfunction or fault on the line for production and manufacturing of packs P downstream of the manufacturing machine 1 has been resolved, the following steps occur in succession for restarting of the manufacturing machine 1 :
- the stopping device 16 is commanded to unblock the feeding of packs P coming from the channel C towards the output station 6 (Figure 3F);
- the packs P contained inside the channel C are fed towards the output station 6 (Figure 3F);
- once emptying of the channel C is completed, the deflecting device 14 is commanded to move from the first configuration to the second configuration, in which the packs P contained in the channel C* are fed towards the output station (Figure 3G); and
- lastly, the deflecting device 14 is commanded to move from the second configuration and to return once again into the first configuration; normal operation of the feeding and accumulating system 10, in which the packs P coming from the processing station S3 are fed as input to the channel C towards the output station 6, can thus resume (Figure 3H).

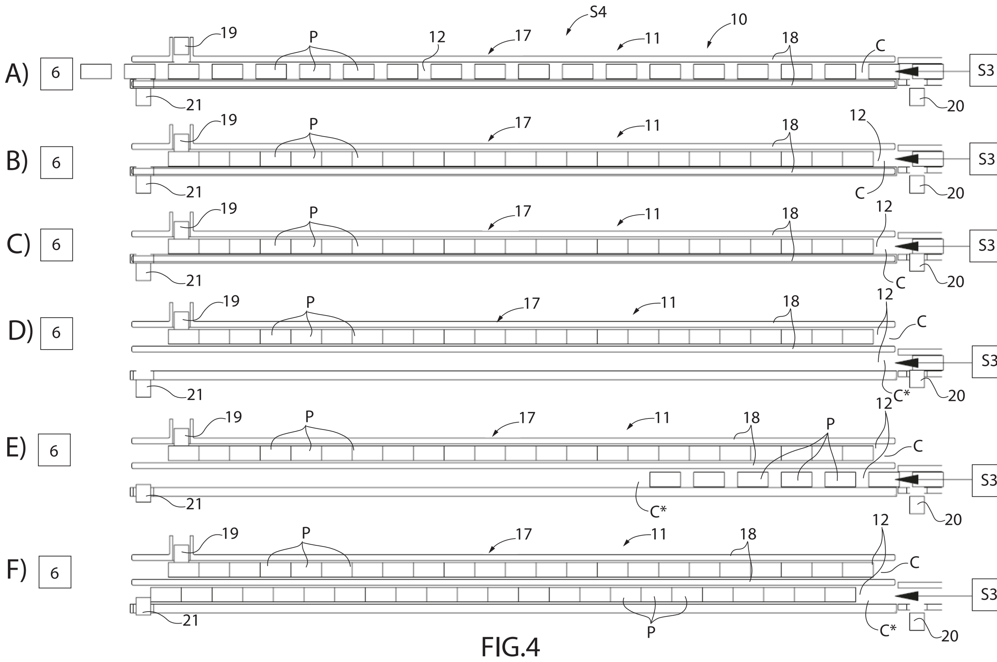

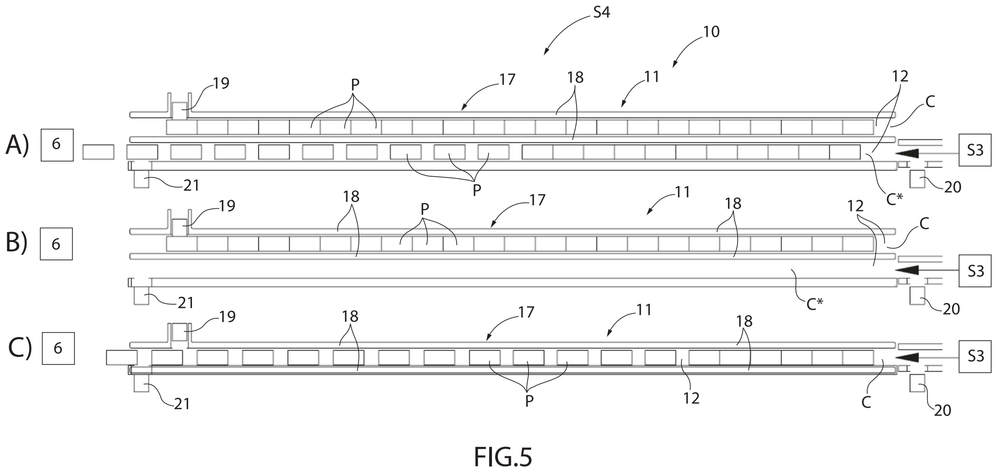

According to a second embodiment shown in Figures 4 and 5, the processing station S4 comprises a system 10 for feeding and accumulating the packs P that extends along a final section of the feeding path Q along a feeding direction A.

Advantageously, the feeding and accumulating system 10 comprises a transport conveyor 11 which in turn comprises a belt conveyor 12 having a multiple width. In other words, the belt conveyor 12 has a width (obtained in a direction transverse to the feeding direction A) such as to accommodate a plurality of packs P arranged side by side. In particular, the belt conveyor 12 has a double width, i.e., such as to accommodate two packs P arranged side by side. The belt conveyor 12 is looped around a pair of pulleys and is provided with an upper branch and a lower branch.

The belt conveyor further comprises a movable equipment 17, which is provided with a pair of guides 18 which are arranged parallel to one another and extend along the entire length of the upper branch and define a (first) channel C. The movable equipment 17 is configured to translate in a direction orthogonal to the feeding direction A. The movable equipment 17 is configured to translate along the entire length (obtained in a direction transverse/orthogonal to the feeding direction A) of the belt conveyor 12. In more detail, the movable equipment 17 is configured to move between a first work position, in which the sole first channel C for collecting the packs P is defined, and a second work position, in which two channels C, C* for collecting the packs P are defined, arranged parallel to one another and to the feeding direction A; and vice versa from the (second) work position to the (first) work position. By moving from the first to the second work position, the movable equipment 17 makes the packs P accessible to the channel C*.

The movable equipment 17 further comprises a (first) stopping device 19 located at one end of the pair of guides 18 and at an output area of the transport conveyor 11. The stopping device 19 is configured to block feeding of the packs P coming from the channel C towards the output station 6.

The feeding and accumulating system 10 further comprises a (second) stopping device 20 located at an input area of the transport conveyor 11. The stopping device 20 is configured to block the feeding of packs P coming from the processing station S3 as input to the transport conveyor 11 (in particular to the channels C, C*).

The feeding and accumulating system 10 further comprises a (third) stopping device 21 located at an output area of the transport conveyor 11. The stopping device 21 is configured to block the feeding of packs P coming from the channel C* towards the output station 6.

In this case, the feeding and accumulating system 10 does not have devices configured for deflection of the packs P.

The operating method of the feeding and accumulating system 10 discussed here above will be described below.

According to what is illustrated in Figure 4A, during normal operation of the feeding and accumulating system 10, the movable equipment 17 is arranged in the (first) work position, in which a single channel C for collecting the packs P is defined and therefore the packs P coming from the processing station S3 that reach the input area are directed into said channel C. Furthermore, during normal operation of the feeding and accumulating system 10, all the stopping devices 19, 20, 21 are disabled so as to allow passage of the packs P.

If, on the other hand, a malfunction or fault occurs on the line for production and manufacturing of packs downstream of said manufacturing machine 1, the following steps occur in succession:
- the stopping device 19 is commanded to block the feeding of packs P from the single channel C towards the output station 6; in this manner, the packs P coming from the processing station S3 all accumulate inside the single channel C up until when the single channel C is completely full (Figure 4B);
- once filling of the single channel C is completed, the stopping device 20 is commanded to block the feeding of packs P coming from the processing station S3 towards the feeding and accumulating system 10 and, in particular, inside the channel C (Figure 4C);
- the movable equipment 17 is commanded to move from the first work position, in which the single channel for collecting the packs P is defined, to the second work position, in which two channels C, C* for collecting the packs P arranged parallel to one another are defined; by translating from the first work position to the second work position, the movable equipment 17 also drags all the packs P contained inside the channel C (Figure 4D);
- once passage of the movable equipment 17 from the first to the second work position is completed, the stopping device 20 is commanded to unblock the feeding of packs P coming from the processing station S3 towards the feeding and accumulating system 10 and, simultaneously, the stopping device 21 is commanded to block the feeding of packs P coming from the channel C* towards the output station 6 (Figure 4E); and
- lastly, all the packs P coming from the processing station S3 and being processed in the manufacturing machine 1 are accumulated inside the channel C* up until filling of said channel C (Figure 4F).

Once the malfunction or fault on the line for production and manufacturing of packs P downstream of the manufacturing machine 1 has been resolved, the following steps occur in succession for restarting of the manufacturing machine 1 :
- the stopping device 21 is commanded to unblock the feeding of packs P coming from the channel C* towards the output station 6; all the packs P contained inside the channel C* are fed towards the output station 6 (Figure 5G);
- once emptying of the channel C* is completed, the movable equipment 17 is commanded to move from the second work position to the first work position, in which the single collection channel C is exclusively defined; by moving from the second to the first work position, the movable equipment 17 also drags all the packs contained inside the channel C (Figure 5H); and
- the stopping device 19 is commanded to unblock feeding of the packs P contained in the single channel C towards the output station 6 (Figure 5I); and normal operation of the feeding and accumulating system 10 can thus resume.

Both embodiments of the feeding and accumulating system 10 described above have several advantages. In particular, in both embodiments, the feeding and accumulating system 10 can be sized so as to be able to accommodate, during the stopping steps, all the packs P that are simultaneously being processed inside said manufacturing machine 1. In this manner, the discarding of packs P will be substantially eliminated upon restarting.

### LIST OF REFERENCE NUMBERS

- 1: manufacturing machine
- 2: feeding system
- 4: input station
- 5: processing stations
- 6: output station
- 7: frame
- 8: pack feeding unit
- 9: moulding drum
- 10: feeding and accumulating system
- 11: transport conveyor
- 12: belt conveyor
- 12*: belt conveyor
- 13: deflecting device
- 14: deflecting device
- 15: stopping device
- 16: stopping device
- 17: movable equipment
- 18: guides
- 19: stopping device
- 20: stopping device
- 21: stopping device
- P: pack
- Q: processing path
- A: feeding direction
- S1: processing station
- S2: processing station
- S3: processing station
- S4: processing station
- C: channel
- C*: channel

## Claims

1. A system (10) for feeding and accumulating parallelepiped-shaped packs (P) for a manufacturing machine (1) comprising a transport conveyor (11) comprising in turn two channels (C, C*) arranged side by side, parallel to one another and parallel to a feeding direction (A) of the packs (P), wherein:
a main channel (C) is configured to receive the packs (P) coming from a processing station (S3) of the manufacturing machine (1) and to feed them to an output station (6) of the manufacturing machine (1);
an auxiliary channel (C*) is configured to accommodate the packs (P) coming from the processing station (S3) exclusively when a malfunction occurs downstream of the system (10) along a processing path (Q) of the packs (P) and once the filling of the main channel (C) has been completed; and to feed the packs (P) to the output station (6), once the malfunction downstream of the system (10) has been resolved;
a first deflecting device (13) is located in the area of an input of the transport conveyor (11) and is configured to selectively feed the packs (P) coming from the processing station (S3) to the main channel (C) or to the auxiliary channel (C*);
a second deflecting device (14) is located in the area of an output of the transport conveyor (11) and is configured to selectively establish a communication with the main channel (C) or with the auxiliary channel (C*) from which it receives the packs (P) to be transferred to the output station (6);
a first stopping device (15) is located in the area of an input of the transport conveyor (11) and is configured to block the feeding of packs (P) coming from the processing station (S3) both to the main channel (C) and to the auxiliary channel (C*), wherein the first stopping device (15) is located upstream of the first deflecting device (13) along the processing path (Q) of the packs (P);
a second stopping device (16) is located in the area of an output of the transport conveyor (11) and is configured to block the feeding of packs (P) coming from the main channel (C) to the output station (6), wherein the second stopping device (16) is located upstream of the second deflecting device (14) along the processing path (Q) of the packs (P).

2. A system according to claim 1, wherein the transport conveyor (11) comprises a pair of single-width belt conveyors (12, 12*) arranged parallel to one another and to the feeding direction (A) of the packs (P) and each defining a respective channel (C, C*) for the packs (P).

3. A system according to claim 1, wherein the transport conveyor (11) comprises a single multiple-width belt conveyor (12), in particular double, to accommodate two packs (P) arranged side by side and partition elements, preferably fixed, configured to define two channels (C, C*) that extend substantially for the entire length of an upper branch of the belt conveyor (12).

4. A system (10) for feeding and accumulating parallelepiped-shaped packs (P) for a manufacturing machine comprising:
- a transport conveyor (11) to feed the packs (P) along the feeding direction (A) of the packs (P);
- a movable equipment (17), which is provided with a pair of guides (18) which are arranged parallel to one another and extend along the entire length of the transport conveyor (11); the movable equipment (17) is configured to translate in a direction orthogonal to the feeding direction (A) between a first work position, in which a sole main channel (C) is defined, configured to receive the packs (P) coming from a processing station (S3) of the manufacturing machine (1) and to feed them to an output station (6) of the manufacturing machine (1), and a second work position in which both the main channel (C) and an auxiliary channel (C*) are defined, configured to accommodate the packs (P) coming from the processing station (S3) only when a malfunction occurs downstream of the system (10) along a processing path (Q) of the packs (P) and once the filling of the main channel (C) has been completed and to feed the packs (P) to the output station (6) once the malfunction downstream of the system (10) has been resolved; and vice versa from the second work position to the first work position; wherein the two channels (C, C*) are arranged side by side, parallel to one another and parallel to a feeding direction (A) of the packs (P);
- a first stopping device (19) located at one end of the pair of guides (18) and at an output area of the transport conveyor (11) and configured to block feeding of the packs (P) from the main channel (C) to the output station (6);
- a second stopping device (20) located at an input area of the transport conveyor (11) and configured to block feeding of the packs (P) coming from the processing station (S3) both to the main channel (C) and to the auxiliary channel (C*); and
- a second stopping device (21) located at an output area of the transport conveyor (11) and configured to block feeding of the packs (P) coming from the auxiliary channel (C*) to the output station (6).

5. A system according to claim 4, wherein the transport conveyor (11) comprises a single multiple-width belt conveyor (12), in particular double, to accommodate two packs (P) arranged side by side.

6. A machine (1) for manufacturing parallelepiped-shaped packs (P) comprising:
- a processing station (S3) for the packs (1);
- an output station (6) for the packs (1), which is located downstream of the processing station (S3) along a processing path (Q) of the packs (P); and
- a system (10) for feeding and accumulating the packs (P) interposed between the processing station (S3) and the output station (6), according to any one of the preceding claims.
